# EUROPEAN PATENT SPECIFICATION

(11) **EP 1 746 326 B1**
(45) Date of publication and mention of the grant of the patent: **14.03.2012**
(21) Application number: 06012019.3
(22) Date of filing: 12.06.2006
(51) Int. Cl.: F16L 37/098, F16L 37/133, F16L 15/08

(54) **A quick-coupling with threadedly engaged portions**
Schnellkupplung mit Gewindeteilen
Raccord rapide avec partie filetée

(30) Priority: 20.07.2005 IT MI20051383
(43) Date of publication of application: 24.01.2007
(73) Proprietor: Faster S.p.A., 20124 Milan (IT)
(72) Inventor: Arosio, Massimo, 24040 Treviglio (Bergamo) (IT)
(74) Representative: Borsano, Corrado

(56) References cited:
- US-A- 5 029 904
- US-A1- 2004 004 354

## Description

### BACKGROUND OF THE INVENTION

The present invention relates to a quick-coupling comprising threadedly engaged portions.

As is known, quick-couplings including a male part and a female part, comprising a plurality of elements which are mostly made by turning processes.

The quick-coupling forming portions either comprise ring recesses for engaging therein resilient gaskets, or have assembling threads to be mutually coupled to one another.

In such an application, it is very important to prevent the threaded connection from loosening in the time, in particular as the quick-coupling is used in hydraulic systems, for example for connecting demolition hammers or the like implements. In fact, in such a hydraulic system, the operating pressures and hydraulic fluid pulsating frequencies cause the threaded connection to be progressively released.

To overcome the above drawback, it has been already attempted to connect by a glue the threaded parts, but the achieved results have not been found as fully satisfactory; moreover, the glueing operations require a comparatively long time.

### SUMMARY OF THE INVENTION

Accordingly, the main object of the present invention is to overcome the above mentioned drawbacks of the prior art and provide a threaded connection between the parts or portions constituting a quick-coupling, while assuring that, even in a case of a high pressure hydraulic fluid, and large system pulsating frequencies, the threaded connection is not loosened, to prevent the threaded portions from being disengaged from one another in extreme cases.

According to the present invention, the above mentioned object is achieved by a quick-coupling as defined in claim 1.

Further advantages of the invention will become more apparent from the following disclosure and the dependent claims.

### BRIEF DESCRIPTION OF THE DRAWINGS

The subject matter according to the present invention will be disclosed in a more detailed manner hereinafter with reference to an embodiment thereof, given only by way of an example, and shown in the accompanying drawings, where:
Figure 1 is a schematic view, as partially cross-sectioned, of a male portion of a prior quick-coupling;
Figure 2 is a schematic view, as partially cross-sectioned, showing two tubular elements of a quick-coupling, threadedly assembled with one another and made according to the present invention;
Figure 3 shows, on an enlarged scale, that portion of the quick-coupling including a circumferential slot and a circumferential enlarged portion before the connection operation thereof; and
Figure 4 shows that portion of the quick-coupling including the circumferential slot, upon assembling to the hammer-like enlarged portion.

### DESCRIPTION OF THE PREFERRED EMBODIMENT

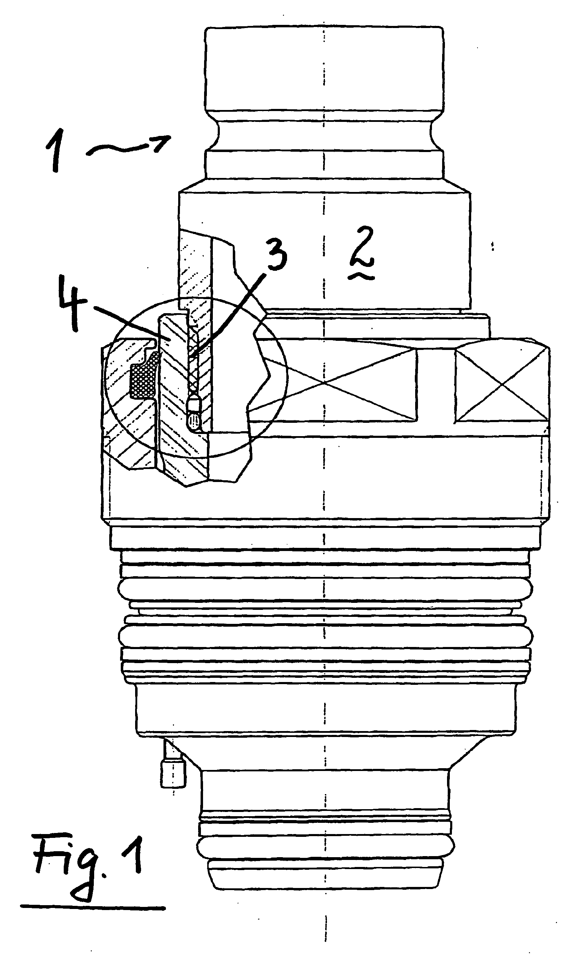

As shown in figure 1, the male part or portion 1 of a quick-coupling or connection comprises a projecting element 2 engaged, by a threaded type of engagement 3, with a tubular element 4 of the quick-coupling 1.

More specifically, the projecting element 2 is coupled to said tubular element 4 by an outer thread and an inner thread, said threads being generally indicated by the reference number 3.

Between the body 2 and body 4 a resilient gasket, indicated by the reference number 5, is advantageously provided.

As stated, in a prior embodiment, shown in figure 1, the thread 3 is not locked and, accordingly, the portions 2 and 4 can detach from one another.

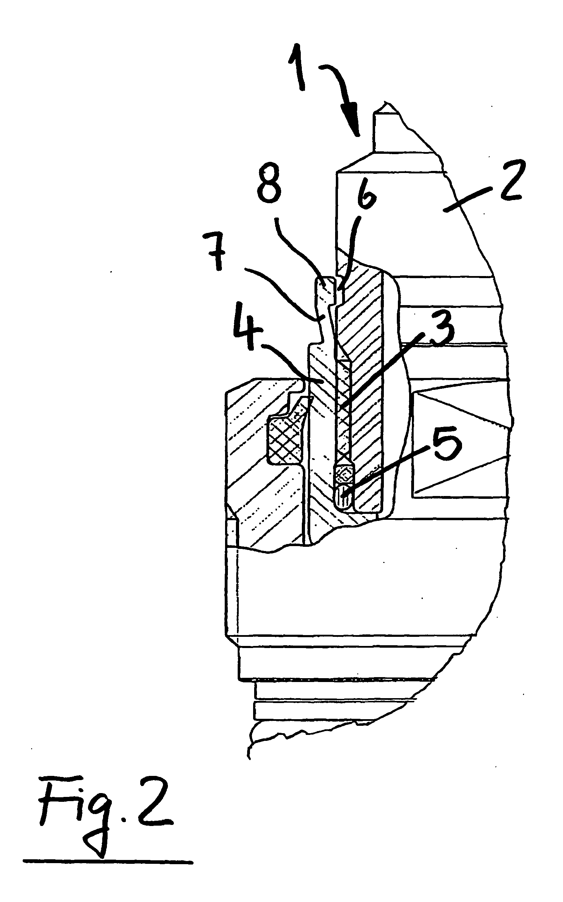

According to the invention (figures 2, 3, 4), the portion 2 is herein provided with an outer circumferential slot 6 and, from the tubular portion 4 a circumferentially extending land or rib portion 7 projects.

The rib 7, which is of a comparatively thin construction, ends with a hammer-like enlarged portion 8. Said hammer-like enlarged portion 8, with the coupling in an assembled condition, being oriented toward the circumferential slot 6.

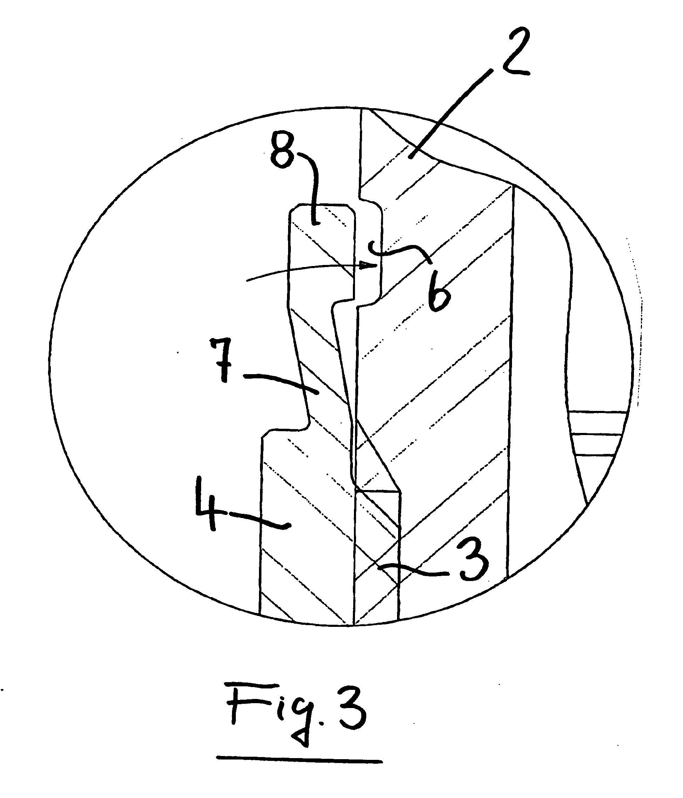

To allow the portion 2 of the quick-coupling 1 to be easily thread engaged in the tubular body 4, the circumferential wall 7 is slightly outward radially inclined, thereby as the threads 3 are mutually engaged, no objectable contact of the body of the portion 2 and the hammer-like enlarged portion 8 will occur. As is clearly shown in figure 3, up to a full thread engagement 3 of the portion 2 in the tubular element 4, owing to the provision of outward radially slanted wall 7, the hammer-like enlarged portion 8 will not contact the outer wall of the portion 2.

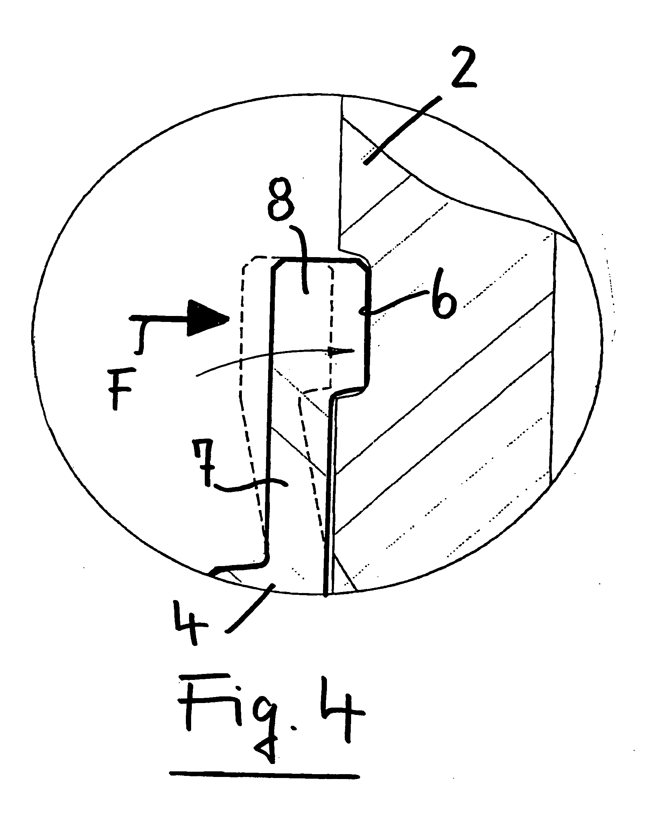

Upon fully assembling said portions 2 and 4, and with the circumferential enlarged portion 8 precisely coinciding with the circumferential slot 6, as shown in figure 3, by a force F transmitted by a press, as shown in figure 4 by the arrow (f), the enlarged portion 8, by a plastic deformation of the wall 7, will be brought to a permanent type of contact with the slot 6, thereby locking the portion 2 with respect to the tubular element 4, and safely preventing any mutual movements of said two constructional elements as well as any movements inside the thread.

## Claims

1. A quick-coupling (1) comprising threadely engaged portions (2, 4) comprising a first quick-coupling portion (2), having a first quick-coupling portion thread (3), and a circumferential outer slot (6), and a second quick-coupling portion (4), having a second quick-coupling portion thread (3) which, with the quick-coupling (1) in an assembled condition, is threadedly engaged with said first quick-coupling portion thread (3), said second quick-coupling portion (4) having a circumferential wall (7) which, at a free end thereof and at said circumferential outer slot (6), comprises a hammer-like circumferential enlarged portion (8) oriented toward said circumferential outer slot (6) and adapted to be coupled with said circumferential outer slot (6) after having fully assembled said first and second quick-coupling portions (2, 4), said circumferential wall (7) being plastically deformed by means of a circumferential force (F) applied to said hammer-like portion (8) once said first and second quick-coupling portions (2,4) have been fully assembled thus bringing to a permanent type of contact said hammer-like portion (8) with said circumferential outer slot (6).

2. A quick-coupling (1), according to claim 1, **characterized in that** said circumferential wall (7) supporting said hammer-like enlarged portion (8) is comparatively thin thus being plastically deformed by means of applying said circumferential force (F).

3. A quick-coupling (1), according to claim 2, **characterized in that** said circumferential wall (7) supporting said hammer-like enlarged portion (8) , before assembling said first and second quick-coupling portions (2, 4), is slightly outward radially inclined.

## Patentansprüche

1. Schnellkupplung (1) mit über ein Gewinde in Eingriff stehenden Abschnitten (2, 4), die einen ersten Schnellkupplungsabschnitt (2), der ein erstes Schnellkupplungsabschnittsgewinde (3) und einen äußeren Umfangsschlitz (6) aufweist, und einen zweiten Schnellkupplungsabschnitt (4) umfassen, der ein zweites Schnellkupplungsabschnittsgewinde (3) aufweist, das in einem zusammengesetzten Zustand der Schnellkupplung (1) mit dem ersten Schnellkupplungsabschnittsgewinde (3) in Gewindeeingriff steht, wobei der zweite Schnellkupplungsabschnitt (4) eine Umfangswand (7) aufweist, die an einem freien Ende davon und an dem äußeren Umfangsschlitz (6) einen hammerartigen, erweiterten Umfangsabschnitt (8) umfasst, der in Richtung des äußeren Umfangsschlitzes (6) orientiert und zur Kopplung mit dem äußeren Umfangsschlitz (6) ausgebildet ist, nachdem der erste und zweite Schnellkupplungsabschnitt (2, 4) vollständig zusammengebaut worden sind, wobei die Umfangswand (7) mittels einer Umfangskraft (F) plastisch verformt wird, die auf den hammerartigen Abschnitt (8) aufgebracht wird, sobald der erste und zweite Schnellkupplungsabschnitt (2, 4) vollständig zusammengesetzt worden sind, wodurch der hammerartige Abschnitt (8) mit dem äußeren Umfangsschlitz (6) zu einer permanenten Art von Kontakt gebracht wird.

2. Schnellkupplung (1) nach Anspruch 1,
**dadurch gekennzeichnet, dass**
die Umfangswand (7), die den hammerartigen erweiterten Abschnitt (8) abstützt, vergleichsweise dünn ist, wodurch sie mittels Aufbringung der Umfangskraft (F) plastisch verformt wird.

3. Schnellkupplung (1) nach Anspruch 2,
**dadurch gekennzeichnet, dass**
die Umfangswand (7), die den hammerartigen, erweiterten Abschnitt (8) abstützt, bevor der erste und zweite Schnellkupplungsabschnitt (2, 4) zusammengesetzt sind, geringfügig radial nach außen geneigt ist.

## Revendications

1. Raccord rapide (1) comprenant des portions mises en prise par filets (2, 4) comprenant une première portion de raccord rapide (2) ayant un filet de première portion de raccord rapide (3) et une fente externe circonférentielle (6), et une seconde portion de raccord rapide (4), ayant un filet de seconde portion de raccord rapide (3) qui, quand le raccord rapide (1) est dans une condition assemblée, est mise en prise par filets avec ledit filet de première portion de raccord rapide (3), ladite seconde portion de raccord rapide (4) ayant une paroi circonférentielle (7) qui, au niveau d'une extrémité libre de cette dernière et au niveau de ladite fente externe circonférentielle (6), comprend une portion agrandie circonférentielle similaire à un marteau (8) orientée vers ladite fente externe circonférentielle (6) et adaptée pour être couplée avec ladite fente externe circonférentielle (6) après que lesdites première et deuxième portions de raccord rapide (2, 4) ont été entièrement assemblées, ladite paroi circonférentielle (7) étant déformée plastiquement au moyen d'une force circonférentielle (F) appliquée à ladite portion similaire à un marteau (8) une fois que lesdites première et seconde portions de raccord rapide (2, 4) ont été entièrement assemblées amenant ainsi à un type de contact permanent de ladite portion similaire à un marteau (8) avec ladite fente externe circonférentielle (6).

2. Raccord rapide (1) selon la revendication 1, **caractérisé en ce que** ladite paroi circonférentielle (7) supportant ladite portion agrandie similaire à un marteau (8) est comparativement fine étant ainsi déformée plastiquement au moyen de l'application de ladite force circonférentielle (F).

3. Raccord rapide (1) selon la revendication 2, **caractérisé en ce que** ladite paroi circonférentielle (7) supportant ladite portion agrandie similaire à un marteau (8), avant l'assemblage desdites première et seconde portions de raccord rapide (2, 4), est légèrement inclinée radialement vers l'extérieur.
